(19) Europäisches Patentamt
European Patent Office
Office européen des brevets

(11) **EP 4 314 923 B1**

(12) **FASCICULE DE BREVET EUROPEEN**

(45) Date de publication et mention
de la délivrance du brevet:
**30.07.2025 Bulletin 2025/31**

(21) Numéro de dépôt: **22717858.9**

(22) Date de dépôt: **25.03.2022**

(51) Classification Internationale des Brevets (IPC):
**G02B 6/44** *(2006.01)*

(52) Classification Coopérative des Brevets (CPC):
**G02B 6/44775**

(86) Numéro de dépôt international:
**PCT/FR2022/050555**

(87) Numéro de publication internationale:
**WO 2022/200744 (29.09.2022 Gazette 2022/39)**

(54) **JOINT D'ETANCHEITE POUR PORT DE CABLAGE ETANCHE D'UN BOITIER**

DICHTUNG FÜR EINEN ABGEDICHTETEN VERKABELUNGSANSCHLUSS EINES GEHÄUSES

SEAL FOR A SEALED CABLING PORT OF A CASING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.03.2021 FR 2103069**

(43) Date de publication de la demande:
**07.02.2024 Bulletin 2024/06**

(73) Titulaire: **Aginode Group**
**75001 Paris (FR)**

(72) Inventeurs:
• **JEAN, Jérémy**
**08350 BOSSEVAL ET BRIANCOURT (FR)**
• **MIART, Freddy**
**08000 CHARLEVILLE-MEZIERES (FR)**

(74) Mandataire: **Ipsilon**
**Le Centralis**
**63, avenue du Général Leclerc**
**92340 Bourg-la-Reine (FR)**

(56) Documents cités:
**WO-A1-2019/195109      US-A- 6 036 541**
**US-A1- 2004 161 970      US-A1- 2017 200 537**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un joint d'étanchéité pour port de câblage étanche d'un boîtier. Cette invention trouve plus particulièrement son application dans des boîtiers étanche destinés à recevoir des fibres optiques pour leur raccordement avec des dérivations optiques.

Dans le domaine des câbles optiques, il en existe de plusieurs tailles de diamètre. Notamment un câble optique principal peut comporter plusieurs modules optiques comportant chacun plusieurs fibres optiques. Un câble principal peut avoir un diamètre extérieur de plus d'une dizaine de millimètres, et peut par exemple comporter jusqu'à 24 modules, ces modules de quelques millimètres de diamètres chacun pouvant eux même comporter jusqu'à 24 fibres optiques, les fibres optiques étant chacune d'un diamètre de l'ordre de la centaine de micromètres. De cet état de fait, il apparaît évident que les diamètres extérieurs des câbles à raccorder sont variables, il existe un besoin d'assurer l'étanchéité de ces câbles, quels que soient leur diamètre, au niveau du port de câblage du boîtier.

Il est connu des boîtiers comportant un presse-étoupe au niveau du port de câblage par lequel le câble est introduit dans le boîtier. Ces presse-étoupes posent problème car la qualité de l'étanchéité est fonction de la compression appliquée par le presse-étoupe, au point tel qu'un opérateur de câblage aura tendance à rechercher la compression manuelle maximale au moment de la mise en place du câble dans le presse-étoupe. Ces compressions sur le câble optique créent des contraintes locales en comprimant la matière de sorte que la qualité d'un signal véhiculé par ce câble peut être impactée négativement en ces points de contrainte.

Des solutions d'étanchéité au niveau de ports de câblage entrants et/ou sortants de boitiers étanches sont toujours tributaires des différents diamètres de câbles destinés à pouvoir passer par un même port. Plus l'amplitude des diamètres est grande, plus le nombre de joints nécessaires pour s'adapter à cette amplitude sera important. La difficulté est d'avoir un nombre minimal de joints d'étanchéité, voire un joint unique qui couvre différents diamètres de câbles possibles au niveau de ce port de câblage.

Il est connu du document WO2019-195109 un joint d'étanchéité unique adaptable à un nombre figé de tailles de diamètre de câble. Selon un des modes de réalisation, ce joint est destiné à pouvoir s'adapter à cinq diamètres distincts de câblage. Ce document enseigne un corps pourvu d'une embase et surmonté d'une tubulure pourvue de plusieurs étages cylindriques concentriques de diamètres intérieurs inférieur les uns au autres au fur et à mesure d'un éloignement de l'embase. Ce type de joint est prévu pour former à la fois un port de sortie d'un boîtier de câblage et assurer en même temps l'étanchéité de ce port de câblage. Le fonctionnement de ce type de joint est d'être sectionné au niveau de l'un des cinq diamètres pour proposer le diamètre adapté au câble qui le traverse. Dès lors ce type de joint est à usage unique, lorsqu'on souhaite l'utiliser pour un nouveau câblage avec un câble plus fin.

La publication US 2004/161970 A1 divulgue un connecteur pour câble coaxial, le câble coaxial comprenant un conducteur extérieur ondulé en spirale et un conducteur intérieur. Le connecteur comprend une interface de connecteur à une extrémité du connecteur, un corps cylindrique creux et un contact intérieur. L'interface de connecteur est couplée au corps cylindrique creux. Le corps présente une surface intérieure comportant une section à rainure hélicoïdale interne à une extrémité du câble et un butoir à l'extrémité du connecteur de la section à rainure hélicoïdale interne.

Ainsi l'invention propose une modularité des solutions d'étanchéité permettant de limiter le nombre d'accessoires nécessaires pour équiper un boîtier étanche au niveau de ses ports d'entrée et ou de sortie.

L'invention a pour objet un joint d'étanchéité pour un port de câble d'un boîtier, joint comportant un corps déformable, ce corps déformable étant traversant et comportant une embase, une collerette et une tubulure annelée entre l'embase et la collerette, ce corps étant unitaire tel que la collerette et l'embase présentent des diamètres intérieurs minimum respectivement supérieurs à un diamètre intérieur minimum de la tubulure annelée, la tubulure annelée comportant des annelures intérieures et des bourrelets extérieurs, tels qu'un bourrelet extérieur est disposé axialement entre deux annelures intérieures adjacentes, et tel qu'au moins deux annelures intérieures adjacentes présentent respectivement deux de ces diamètres intérieurs minimum, la tubulure annelée comportant des rainures annulaires extérieures, telles qu'un bourrelet extérieur est situé entre deux rainures annulaires extérieures, le bourrelet extérieur présentent une épaisseur radiale inférieure à une épaisseur radiale au droit de ces rainures annulaires extérieures.

Ainsi le caractère déformable du corps provient de sa structure particulière et des variations d'épaisseur observées de l'embase et la collerette, et plus particulièrement de celles de la tubulure annelée.

En particulier, des diamètres intérieurs respectivement minimum pour la collerette et l'embase peuvent être au moins supérieurs à 1,1 fois ; mieux au moins 1,4 fois le diamètre intérieur minimum de la tubulure annelée. Plus particulièrement ces rapports dimensionnels sont déterminés en l'absence de contraintes exercées sur le corps, autrement dit, sans déformation du corps.

Avantageusement, au moins deux annelures intérieures adjacentes présentent respectivement des diamètres intérieurs strictement différents, tel qu'un bourrelet extérieur disposé entre ces deux annelures intérieures adjacentes présente

un diamètre intérieur supérieur aux diamètres intérieurs minimum locaux respectifs de ces deux annelures adjacentes, et

un diamètre extérieur maximal supérieur aux diamètres extérieurs locaux respectifs de ces deux annelures adjacentes.

Dans une telle configuration, un bourrelet extérieur peut être disposé entre ces deux annelures et présenter à la fois un diamètre intérieur supérieur aux diamètres intérieurs minimum locaux respectifs de ces deux annelures adjacentes, et ou un diamètre extérieur maximal supérieur aux diamètres extérieurs maximum locaux respectifs de ces deux annelures adjacentes, ces diamètres extérieurs maximum locaux correspondant au droit des rainures annulaires extérieures.

La tubulure annelée peut aussi comporter des annelures intérieures telles qu'au moins deux annelures intérieures adjacentes présentent respectivement un même diamètre intérieur minimum local, de préférence ce même diamètre intérieur minimum peut être le diamètre intérieur minimum de l'ensemble de la tubulure annelée 13, voire même du joint en tant que tel, de sorte qu'il est ainsi proposé une double étanchéité annulaire pour les câbles de plus petits diamètres.

De préférence, la tubulure annelée peut être expansible radialement de sorte que des annelures intérieures adjacentes de la tubulure annelée peuvent présenter sous contrainte, par exemple sous contrainte d'un câble traversant le joint d'étanchéité, un diamètre intérieur identique.

Plus particulièrement, la tubulure annelée peut comporter au moins quatre annelures adjacentes, par exemple telles que ces annelures présentent chacun un diamètre intérieur minimum local croissant.

Alternativement, le diamètre intérieur minimum de la partie annelée peut être présenté par une annelure disposée entre deux annelures adjacentes de diamètre intérieur minimum local supérieur à ce diamètre intérieur minimum.

De préférence, la collerette et l'embase peuvent présenter des diamètres extérieurs supérieurs à ceux de la tubulure annelée afin de n'assurer la constriction étanche autour du câble uniquement au niveau de la tubulure annelée dont la structure permet une adaptation souple autour du câble. En particulier, ces diamètres extérieurs de la collerette et de l'embase peuvent être supérieurs à celui d'un bourrelet situé entre deux rainures annulaires extérieures de la tubulure annelée. Avec une telle configuration, la tubulure annelée peut se déformer radialement dans le volume de la surface enveloppe définie par la collerette et ou l'embase.

Selon un mode de réalisation, la tubulure annelée peut être délimitée par deux annelures axialement opposées.

Selon un mode de réalisation préféré, la tubulure annelée peut être déformable axialement, de sorte que le joint peut s'adapter aux tolérances de fabrication des boîtiers étanches et notamment aux tolérances dimensionnelles de fabrication des ports d'entrée et ou de sortie de ces boîtiers.

L'invention vise également un ensemble comportant un boîtier étanche muni d'un port de câble, un joint d'étanchéité selon l'invention équipant ce port de câble et un câble, notamment une fibre optique, le câble traversant ce joint d'étanchéité de sorte qu'une étanchéité annulaire intérieure est formée entre le joint et le câble et en ce qu'une étanchéité annulaire extérieure est obtenue entre le joint et le port de câble.

De préférence, cet ensemble comporte un bouchon muni d'un bras de support du câble, le joint d'étanchéité étant disposé dans le bouchon lorsque le bouchon est monté sur le port, tel qu'une étanchéité annulaire radiale peut être obtenue entre le bouchon et le joint d'étanchéité

- par l'embase comportant un godron radial extérieur apte à entrer en contact étanche avec une paroi intérieure du bouchon du port, et ou
- par la collerette présentant un diamètre extérieur supérieur au diamètre de cette paroi intérieure.

Plus particulièrement en position assemblée du bouchon sur le port, le joint d'étanchéité peut venir en contact annulaire d'étanchéité avec un rebord du port d'entrée.

## Brève description des dessins

Les dessins annexés illustrent l'invention :

[Fig. 1] représente une vue de profil extérieur d'un joint selon l'invention
[Fig. 2] représente une vue en coupe longitudinale d'un joint selon l'invention, et en particulier correspondant au joint de la Figure 1 ;
[Fig. 3] représente une vue en coupe éclatée d'un ensemble selon l'invention comportant un joint d'étanchéité selon l'invention tel que la vue de la Figure 3 coupe le joint selon un plan de coupe longitudinal identique à celui de la Figure 2 ;
[Fig. 4] représente une vue en coupe assemblée d'un ensemble selon la Figure 3.
[Fig. 5] et [Fig. 6] représentent des vues en coupe longitudinale de joints selon l'invention mis en œuvre avec des câbles de diamètres extérieurs distincts.

## Description de mode(s) de réalisation

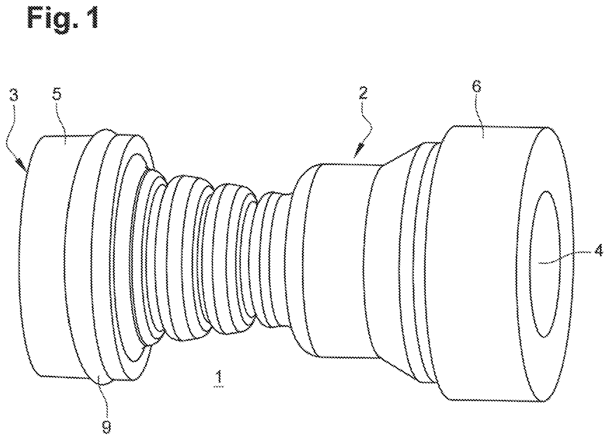

La Figure 1 représente un joint d'étanchéité 1 selon l'invention. Le joint 1 comporte un corps tubulaire 2. Ce corps tubulaire 2 est déformable. Il peut être réalisé dans un matériau élastomérique, une silicone, un caoutchouc, un EPDM ou une résine synthétique. Le matériau est choisi de manière à pouvoir réaliser le corps 2 de manière intégrale par moulage, impression ou injection. Il est de préférence souple.

Le corps 2 comporte un axe longitudinal X formant également axe de symétrie. Le corps 2 est traversant selon l'axe X. Le corps 2 comporte deux extrémités opposées relativement à l'axe X, respectivement 3 et 4. Une première extrémité 3 délimite une embase 5, et la deuxième extrémité 4 délimite une collerette 6. L'embase 5 comporte une ouverture 7 débouchant sur un espace tubulaire interne ouvrant par une ouverture 8 de la collerette 6.

Dans l'exemple représenté, les ouvertures 7 et 8 définissent chacune un pourtour circulaire, l'embase 5 présente un pourtour extérieur de section transversale à l'axe X également circulaire. Le corps 2 est destiné à être traversé par un câble, très généralement de section circulaire. En revanche pour ce qui est du pourtour extérieur de l'embase 5, comme de la collerette 6, d'autre formes peuvent être réalisées pour s'adapter à des logements spécifiques de boîtier, en fonction de la géométrie d'un logement du port de câble dans lequel le joint doit être placé.

En particulier le pourtour extérieur de l'embase 5 comporte une paroi parallèle à l'axe X pourvue d'un godron annulaire 9 pour être retenu par encliquetage dans un renfoncement dudit logement. L'embase 5 est délimitée axialement entre d'une part l'ouverture 7 et d'autre part le godron 9.

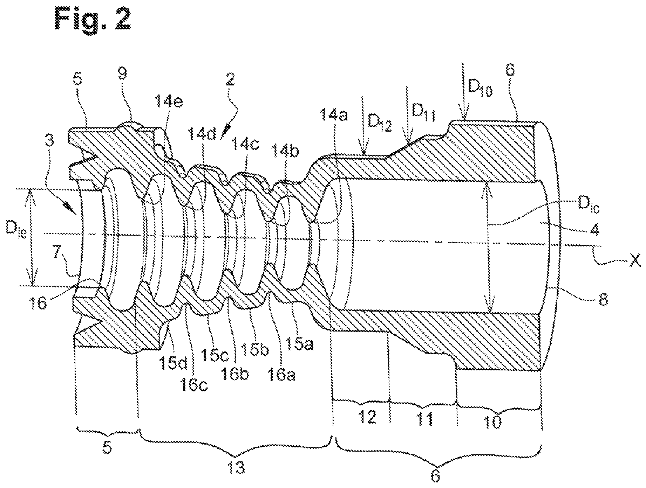

Comme représenté à la Figure 2, le pourtour extérieur et le pourtour intérieur de la collerette 6 sont de sections circulaires et concentriques. Cette collerette 6 comporte trois tronçons successifs 10, 11 et 12. Deux tronçons cylindriques 10 et 12 sont séparés par un tronçon tronconique 11, tel que les trois tronçons présentent un même diamètre intérieur Dic, qui s'avère être un diamètre intérieur minimum de la collerette 6. Les diamètres extérieurs des tronçons de la collerette 6 progressivement dégressifs D10, D11 et D12 au fur et à mesure que l'on s'éloigne de l'ouverture 8, le long de l'axe X.

Le premier tronçon 10 est adjacent à l'ouverture 8 et forme un tronçon de plus grande épaisseur radiale de cette collerette, de sorte que cette surépaisseur du premier tronçon 10 confère une certaine rigidité radiale, mais également longitudinale, locale au joint d'étanchéité.

Entre l'embase 5 et la collerette 6 s'étend une tubulure annelée 13. Cette tubulure annelée comporte à la fois un diamètre intérieur variable le long de l'axe X, mais également un diamètre extérieur variable le long de ce même axe X, tel que ces variations n'ont ni la même amplitude, ni ne sont superposables. Ainsi, la tubulure annelée 13 présente des annelures intérieures 14 et des bourrelets extérieurs 15. Les annelures, ainsi que les bourrelets sont de section transversale circulaires et adjacents les uns aux autres, de sorte qu'un bourrelet tel que 14 est disposé entre deux annelures adjacentes telles que 14. Un diamètre intérieur minimum de la tubulure annelée est présenté par un diamètre intérieur minimum local d'une des annelures.

Une annelure 14 se caractérise selon cet exemple par une portion d'un corps tubulaire, cette portion présentant une constriction locale forte du diamètre intérieur définissant localement un diamètre intérieur minimum. Deux annelures adjacentes peuvent présenter un même diamètre intérieur local minimal D14. Dans l'exemple de réalisation représenté, figure 2, la tubulure annelée comporte cinq annelures adjacentes 14a, 14b, 14c, 14d et 14e, telles que les deux premières annelures adjacentes 14a et 14b, ensembles adjacente à la collerette 6, sont de diamètre intérieur minimum respectivement D14a et D14b égal, et en ce que les trois autres annelures successives 14c, 14d et 14e en direction de l'embase 5 présentent des diamètres intérieurs minimum locaux D14c, D14d et D14e qui augmentent depuis la collerette 6 en direction de l'embase 5. Les annelures D14a et D14e délimitent longitudinalement la tubulure annelée 13, le long de l'axe X.

En particulier on peut avoir dans cet exemple

$$D14a = D14b$$

et

$$D14d = D14e * k$$

$$D14c = D14d * k$$

et

$$D14b = D14c * k$$

où k est compris entre 0.95 et 0.98. La valeur k peut être la même ou distincte d'une annelure à l'autre.

Alternativement, on peut avoir D14a = D14b et

$$D14d = D14e - g$$

$$D14c = D14d - g$$

et

$$D14b = D14c - g$$

Où g est une grandeur finie par exemple constante d'une annelure donnée à une annelure adjacente. g est par exemple à 1 mm, et D14a égal à 3 mm.

Les facteurs k et g peuvent être fonction du taux de déformation radiale souhaitée, du nombre d'annelures, de la taille du port dans le boîtier. Les diamètres intérieurs au droit des annelures sont une série de diamètres intérieurs locaux minimum de la tubulure annelée.

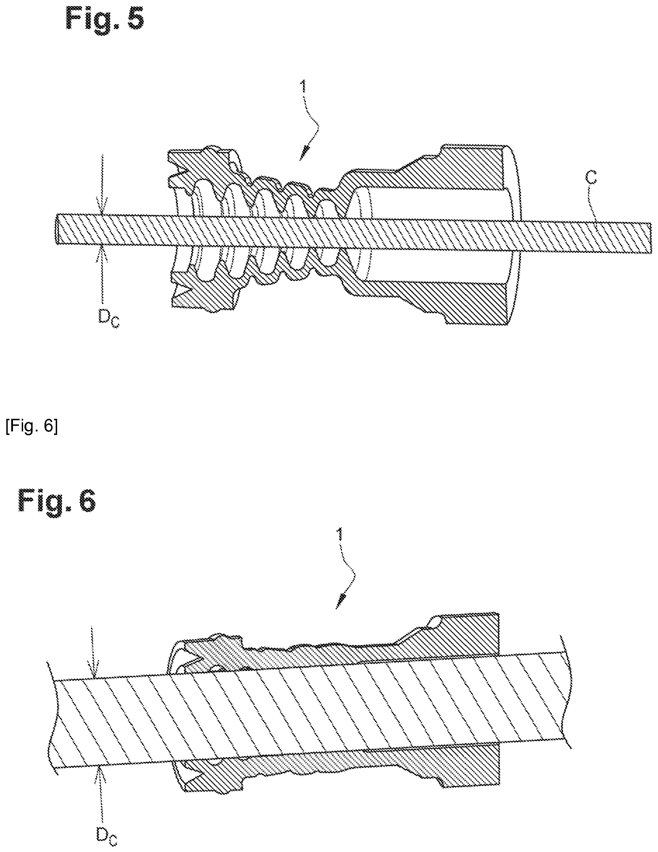

Figure 5, on observe une constriction annulaire interne 16 dans l'embase 5, telle que cette constriction 16 présente un diamètre intérieur minimal local supérieur à tous les diamètres intérieurs minimum de l'ensemble des annelures 14 de la tubulure annelée 13. Le diamètre intérieur minimal Die de l'embase 5 est représenté par le diamètre intérieur au droit de la constriction 16. Le diamètre intérieur minimal Die est supérieur à chaque diamètre intérieur local minimum de chacune des annelures 14 de la tubulure annelée 13.

Le diamètre intérieur minimal Dic de la collerette 6 est également supérieur à chaque diamètre intérieur local minimum de chacune des annelures 14 de la tubulure annelée 13.

La tubulure annelée 13 est telle qu'entre deux annelures adjacentes, elle présente un bourrelet 15. Ainsi dans l'exemple présenté, il y a quatre bourrelets 15a, 15b, 15c et 15d. Les bourrelets sont espacés les uns des autres par respectivement une rainure annulaire extérieure 16. Dans cet exemple, il y a ainsi trois rainures annulaires 16a, 16b et 16c. Le bourrelet 15b est ainsi disposé entre les rainures 16a et 16b, et de même le bourrelet 15c est disposé entre les rainures 16b et 16c. Les bourrelets présentent chacun un diamètre extérieur supérieur à celui des rainures qui l'entourent. Les bourrelets présentent des portions très légèrement tronconiques, et présentent sur leur pourtour intérieur une portion de diamètre intérieur, par exemple supérieur de 1,1 fois à au moins 1,25 fois le diamètre intérieur minimal des annelures adjacentes. Ainsi, le bourrelet 15a présente un diamètre intérieur de l'ordre de 1.1 à 1.25 fois le diamètre intérieur minimum de l'une des deux, voire des deux, annelures 14a et 14b adjacentes. Ainsi de suite pour les autres bourrelets.

Les bourrelets 15 présentent une épaisseur radiale inférieure à une épaisseur radiale au droit des rainures annulaires 16. Plus particulièrement, une épaisseur radiale de la tubulure annulaire peut passer par des minima aux jonctions constituées par ces rainures annulaires extérieures entre bourrelets tels que 15 et les diamètres intérieurs minimum locaux des annelures telles que 14. Ces épaisseurs minimales favorisent la déformabilité de la tubulure annelée 13. Les bourrelets 15 présentent une épaisseur radiale inférieure à une épaisseur radiale au droit des annelures 14.

Les rainures annulaires 16a, 16b et 16c représentent les emplacements où la tubulure annelée présente des diamètres extérieurs minimum. Toutes les rainures peuvent présenter le même diamètre extérieur minimum, ou bien seules certaines, voire une seule, rainures présentent ce diamètre extérieur minimum pour l'ensemble de la tubulure 13.

Dans l'exemple représenté, les rainures annulaires 16a, 16b et 16c sont respectivement disposées au droit, et forment le pourtour extérieur le long de l'axe X, des annelures 14, en particulier des annelures 14b, 14c et 14d.

Cette structure de la tubulure annelée lui confère une aptitude à la déformation radiale, rendue possible par le volume libre défini par le pourtour extérieur de la tubulure annelée et une génératrice de l'embase 5 et ou de la collerette 6. En effet, lorsque le joint est mis en place dans un port de boîtier, ce port définit un logement d'un volume délimité par une génératrice du diamètre le plus important entre celui de l'embase et ou de la collerette.

Pour améliorer la rigidité du joint, une épaisseur radiale de la paroi formant la tubulure annelée 13 est maximale au droit de l'annelure 14e adjacente à l'embase 5. En particulier, cette épaisseur radiale au droit de l'annelure adjacente à l'embase peut être sensiblement égale, à savoir comprise entre 90% et 110% de la valeur de l'épaisseur radiale de la portion 10 de la collerette 6.

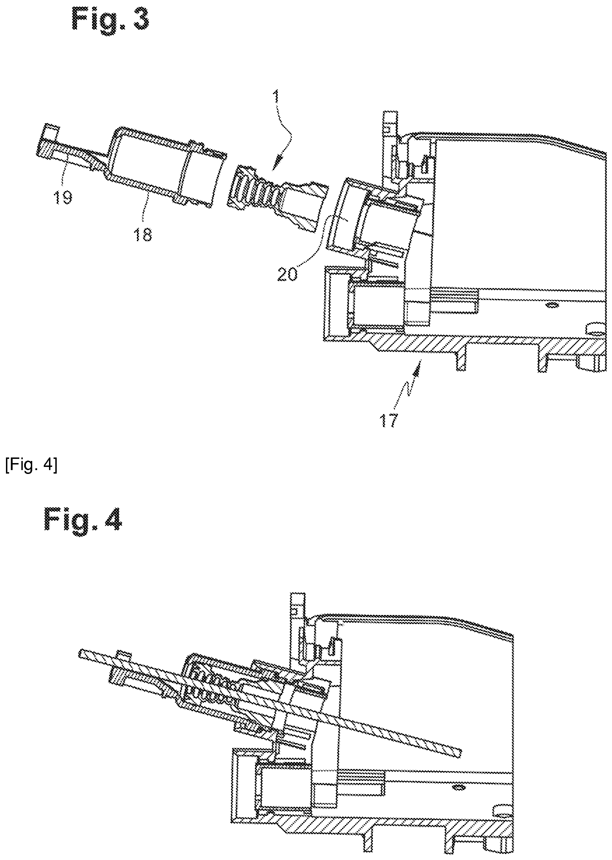

Selon la vue éclatée de la figure 3, la mise en place d'un joint 1 dans un boîtier 17 nécessite de dévisser un bouchon 18 présentant un porte câble 19, et de loger l'embase 5 du joint à l'intérieur du bouchon 18, afin de permettre ensuite un accostage sécurisé du joint dans un logement 20 du boîtier, et un vissage complémentaire du bouchon 18 autour de ce logement 20. Le logement définit un port de câble de ce boîtier.

Comme représenté aux figures 5 et 6, lorsque le diamètre extérieur du câble Dc est compris entre les valeurs des différents diamètres intérieurs D14a, D14b, D14c, D14d et D14e des annelures respectivement 14a, 14b, 14c, 14d et 14e, on observe que seules les annelures de diamètre intérieur inférieur à Dc se déforment radialement afin de respectivement assurer une étanchéité annulaire autour de ce câble. A la figure 5, on observe ainsi une double étanchéité radiale autour du câble de faible diamètre. A la figure 6, le câble représenté a un diamètre extérieur Dc supérieur à tous les diamètres intérieurs minimum locaux « hors contrainte » des annelures de la tubulure annelée 13, mais néanmoins inférieurs aux diamètres extérieurs minimum de l'embase 5 et de la collerette 6, respectivement Die et Dic. Ainsi la tubulure se déforme radialement afin d'assurer un contact interne étanche avec le câble, et ainsi conduire à un placement de ce joint dans le logement 20 toujours identique quel que soit le diamètre extérieur du câble disposé dans le boîtier.

Le bouchon 18 est vissé relativement au logement 20 avec toujours un même nombre de tour de vissage, en particulier un quart de tour, quel que soit le diamètre du câble. Cette uniformité de vissage permet de fiabiliser la mise en place étanche du câble dans le boîtier, sans affecter les capacités de transmission du signal. D'une part la collerette 6 fait étanchéité radiale avec le logement 20, et d'autre part l'embase 5 fait étanchéité radiale avec le bouchon 18.

L'objet de l'invention est de permettre ainsi une adaptabilité du joint à différents type de diamètres de câble, tout en ne nécessitant aucune étape de préparation du joint pour l'opérateur en charge de le placer dans le boîtier.

**Revendications**

1. Joint d'étanchéité (1) pour un port (20) de câble d'un boîtier, ledit joint comportant un corps déformable (2), ce corps déformable étant traversant et comportant une embase (5), une collerette (6) et une tubulure annelée (13) entre l'embase et la collerette, le corps étant unitaire, la collerette et l'embase présentant des diamètres intérieurs minimum (Dic, Die) supérieurs à un diamètre intérieur minimum de la tubulure annelée, la tubulure annelée comportant des annelures intérieures (14) et des bourrelets extérieurs (15), tels qu'un bourrelet extérieur est disposé axialement entre deux annelures intérieures adjacentes, et tel qu'au moins deux annelures intérieures adjacentes présentent respectivement des diamètres intérieurs locaux minimum, la tubulure annelée comportant des rainures annulaires extérieures (16), telles qu'un bourrelet extérieur est situé entre deux rainures annulaires extérieures, le bourrelet extérieur présentant une épaisseur radiale inférieure à une épaisseur radiale au droit de ces rainures annulaires extérieures (16).

2. Joint d'étanchéité selon la revendication 1 dans lequel au moins deux annelures intérieures adjacentes présentent respectivement des diamètres intérieurs minimum strictement différents, et en ce qu'un bourrelet extérieur disposé entre ces deux annelures intérieures adjacentes présente

     un diamètre intérieur supérieur aux diamètres intérieurs minimum locaux respectifs de ces deux annelures adjacentes, et
     un diamètre extérieur maximal supérieur aux diamètres extérieurs locaux respectifs de ces deux annelures adjacentes.

3. Joint d'étanchéité selon la revendication 1 ou 2 dans lequel la tubulure annelée comporte des annelures intérieures (14) telles qu'au moins deux annelures intérieures adjacentes présentent respectivement des diamètres intérieurs minimum strictement identiques.

4. Joint d'étanchéité selon la revendication 1 ou 2 dans lequel la tubulure annelée est expansible radialement de sorte que des annelures intérieures adjacentes de la tubulure annelée peuvent présenter un diamètre intérieur identique sous une contrainte d'un câble traversant le joint d'étanchéité.

5. Joint d'étanchéité selon l'une quelconque des revendications 1 à 4 dans lequel la tubulure annelée comporte au moins quatre annelures adjacentes.

6. Joint d'étanchéité selon l'une quelconque des revendications 1 à 5 dans lequel la collerette et l'embase présentent des diamètres extérieurs supérieurs à celui d'un bourrelet situé entre deux rainures annulaires extérieures de la tubulure annelée.

7. Joint d'étanchéité selon l'une quelconque des revendications précédentes dans lequel la tubulure annelée est délimitée par deux annelures axialement opposées (14a, 14e).

8. Ensemble comportant un boîtier étanche muni d'un port de câble, un joint d'étanchéité selon l'une quelconque des revendications précédentes équipant ce port de câble et un câble, notamment une fibre optique, traversant ce joint d'étanchéité de sorte qu'une étanchéité annulaire intérieure est formée entre le joint et le câble et en ce qu'une étanchéité annulaire extérieure est obtenue entre le joint et le port de câble.

9. Ensemble selon la revendication 8 comportant un bouchon (18) muni d'un bras de support (19) du câble, le joint d'étanchéité étant disposé dans le bouchon lorsque le bouchon est monté sur le port, tel qu'une étanchéité annulaire radiale étant obtenue entre le bouchon et le joint d'étanchéité par

     - l'embase comportant un godron radial extérieur (9) apte à entrer en contact étanche avec une paroi intérieure du bouchon du port, et ou par
     - la collerette présentant un diamètre extérieur supérieur au diamètre de cette paroi intérieure.

10. Ensemble selon la revendication 9 dans lequel en position assemblée du bouchon sur le port, la collerette vient en contact annulaire d'étanchéité avec un rebord du port d'entrée.

**Patentansprüche**

1. Dichtung (1) für eine Kabeleinführung (20) eines Gehäuses, wobei die Dichtung einen verformbaren Körper (2) umfasst, wobei dieser verformbare Körper durchgehend ist und eine Basis (5), einen Kragen (6) und einen gewellten Stutzen (13) zwischen der Basis und dem Kragen umfasst, wobei der Körper einstückig ist, wobei der Kragen und die Basis minimale Innendurchmesser (Dic, Die) aufweisen, die größer als ein minimaler Innendurchmesser des gewellten Stutzens sind, wobei der gewellte Stutzen derartige innere Wellungen (14) und äußere Wülste (15) umfasst, dass eine äußere Wulst axial zwischen zwei benachbarten inneren Wellungen angeordnet ist, und derart, dass mindestens zwei benachbarte innere Wellungen jeweils minimale lokale Innendurchmesser aufweisen, wobei der gewellte Stutzen derartige äußere ringförmige Rillen (16) umfasst, dass eine äußere Wulst zwischen zwei äußeren ringförmigen Rillen gelegen ist, wobei die äußere Wulst eine radiale Dicke aufweist, die geringer als eine radiale Dicke an diesen äußeren ringförmigen Rillen (16) ist.

**2.** Dichtung nach Anspruch 1, wobei mindestens zwei benachbarte innere Wellungen jeweils strikt verschiedene minimale Innendurchmesser aufweisen, und eine äußere Wulst, die zwischen diesen benachbarten inneren Wellungen angeordnet ist, einen Innendurchmesser aufweist, der größer als die jeweiligen lokalen minimalen Innendurchmesser dieser beiden benachbarten Wellungen ist, und einen maximalen Außendurchmesser, der größer als die jeweiligen lokalen Außendurchmesser dieser beiden benachbarten Wellungen ist.

**3.** Dichtung nach Anspruch 1 oder 2, wobei der gewellte Stutzen derartige innere Wellungen (14) umfasst, dass mindestens zwei benachbarte innere Wellungen jeweils strikt identische minimale Innendurchmesser aufweisen.

**4.** Dichtung nach Anspruch 1 oder 2, wobei der gewellte Stutzen radial dehnbar ist, so dass benachbarte innere Wellungen des gewellten Stutzens unter einer Beanspruchung eines die Dichtung durchquerenden Kabels einen identischen Innendurchmesser aufweisen können.

**5.** Dichtung nach einem der Ansprüche 1 bis 4, wobei der gewellte Stutzen mindestens vier benachbarte Wellungen umfasst.

**6.** Dichtung nach einem der Ansprüche 1 bis 5, wobei der Kragen und die Basis Außendurchmesser aufweisen, die größer als der einer zwischen zwei äußeren ringförmigen Rillen des gewellten Stutzens gelegenen Wulst ist.

**7.** Dichtung nach einem der vorhergehenden Ansprüche, wobei der gewellte Stutzen durch zwei axial entgegengesetzte Wellungen (14a, 14e) begrenzt wird.

**8.** Anordnung, umfassend ein mit einer Kabeleinführung versehenes dichtes Gehäuse, eine Dichtung nach einem der vorhergehenden Ansprüche, mit der diese Kabeleinführung ausgestattet ist, und ein Kabel, insbesondere eine Glasfaser, das diese Dichtung so durchquert, dass eine innere ringförmige Abdichtung zwischen der Dichtung und dem Kabel gebildet wird und dass eine äußere ringförmige Abdichtung zwischen der Dichtung und der Kabeleinführung erhalten wird.

**9.** Anordnung nach Anspruch 8, umfassend eine dichte Verschlusskappe (18), die mit einem Halterungsarm (19) für das Kabel versehen ist, wobei die Dichtung in der Verschlusskappe angeordnet ist, wenn die Verschlusskappe auf der Einführung montiert ist, so dass eine radiale ringförmige Abdichtung zwischen der Verschlusskappe und der Dichtung erhalten wird durch

- die Basis, die eine äußere radiale Rippe (9) umfasst, die geeignet ist, in dichten Kontakt mit einer Innenwand der Verschlusskappe der Einführung zu gelangen, und oder durch
- den Kragen, der einen Außendurchmesser aufweist, der größer als der Durchmesser dieser Innenwand ist.

**10.** Anordnung nach Anspruch 9, wobei in der montierten Position der Verschlusskappe an der Einführung der Kragen in ringförmigen Abdichtungskontakt mit einem Rand des Eintrittseinführung gelangt.

**Claims**

**1.** Seal (1) for a cable port (20) of a casing, said seal comprising a deformable body (2), this deformable body passing therethrough and comprising a base (5), a flange (6) and corrugated tubing (13) between the base and the flange, the body being unitary, the flange and the base having minimum inner diameters (Dic, Die) that are larger than a minimum inner diameter of the corrugated tubing, the corrugated tubing comprising inner corrugations (14) and outer beads (15) such that an outer bead is arranged axially between two adjacent inner corrugations, and such that at least two adjacent inner corrugations respectively have minimum local inner diameters, the corrugated tubing comprising outer annular grooves (16) such that an outer bead is located between two outer annular grooves, the outer bead having a radial thickness that is smaller than a radial thickness in line with these outer annular grooves (16).

**2.** Seal according to Claim 1, wherein at least two adjacent inner corrugations

respectively have strictly different minimum inner diameters, and an outer bead arranged between these two adjacent inner corrugations has
an inner diameter that is larger than the respective local minimum inner diameters of these two adjacent corrugations, and
a maximum outer diameter that is larger than the respective local outer diameters of these two adjacent corrugations.

3. Seal according to Claim 1 or 2, wherein the corrugated tubing comprises inner corrugations (14) such that at least two adjacent inner corrugations respectively have strictly identical minimum inner diameters.

4. Seal according to Claim 1 or 2, wherein the corrugated tubing is radially expandable so that adjacent inner corrugations of the corrugated tubing may have an identical inner diameter when stressed by a cable passing through the seal.

5. Seal according to any one of Claims 1 to 4, wherein the corrugated tubing comprises at least four adjacent corrugations.

6. Seal according to any one of Claims 1 to 5, wherein the flange and the base have outer diameters that are larger than that of a bead located between two outer annular grooves of the corrugated tubing.

7. Seal according to any one of the preceding claims, wherein the corrugated tubing is delimited by two corrugations (14a, 14e) at axially opposite ends.

8. Assembly comprising a sealed casing provided with a cable port, a seal according to any one of the preceding claims fitted to this cable port and a cable, in particular an optical fibre, passing through this seal so that inner annular sealing is formed between the seal and the cable and outer annular sealing is obtained between the seal and the cable port.

9. Assembly according to Claim 8, comprising a cover (18) provided with a support arm (19) for the cable, the seal being arranged in the cover when the cover is mounted on the port, such that radial annular sealing is obtained between the cover and the seal by

     - the base comprising an outer radial lip-seal (9) that can come into sealed contact with an inner wall of the cover of the port, and/or by
     - the flange having an outer diameter that is larger than the diameter of this inner wall.

10. Assembly according to Claim 9, wherein, when the cover is in the assembled position on the port, the flange comes into annular sealed contact with a rim of the inlet port.

# Fig.1

# Fig. 2

# Fig. 3

[Fig. 4]

# Fig. 4

**Fig. 5**

[Fig. 6]

**Fig. 6**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2019195109 A

- US 2004161970 A1